# EUROPÄISCHE PATENTSCHRIFT

(11) **EP 1 214 723 B1**
(45) Veröffentlichungstag und Bekanntmachung des Hinweises auf die Patenterteilung: **05.03.2003**
(21) Anmeldenummer: 00964138.2
(22) Anmeldetag: 08.09.2000
(51) Int. Cl.: H01H 1/00, G01N 29/14

(54) **VERFAHREN ZUR BESTIMMUNG DER RESTLEBENSDAUER DER SCHALTKONTAKTE IN EINEM ELEKTRISCHEN SCHALTGERÄT UND EIN ELEKTRISCHES SCHALTGERÄT MIT EINER AUSWERTEEINRICHTUNG ZUR DURCHFÜHRUNG DES VERFAHRENS**
METHOD FOR DETERMINING THE REMAINING SERVICE LIFE OF THE SWITCH CONTACTS IN AN ELECTRIC SWITCHING DEVICE AND ELECTRIC SWITCHING DEVICE WITH AN EVALUATION UNIT FOR CARRYING OUT SAID METHOD
PROCEDE PERMETTANT DE DETERMINER LA DUREE DE SERVICE RESTANTE DES CONTACTS DE COMMUTATION DANS UN COMMUTATEUR ELECTRIQUE ET COMMUTATEUR ELECTRIQUE DOTE D'UN DISPOSITIF D'EVALUATION POUR LA MISE EN OEUVRE DUDIT PROCEDE

(30) Priorität: 20.09.1999 DE 19945058
(43) Veröffentlichungstag der Anmeldung: 19.06.2002
(73) Patentinhaber: Moeller GmbH, 53115 Bonn (DE)
(72) Erfinder: FENNER, Matthias, 65195 Wiesbaden (DE); BERGER, Frank, 53913 Swisttal-Miel (DE); FRÖHLICH, Klaus-Jochen, 01324 Dresden (DE); PRIDÖHL, Eckhardt, 01217 Dresden (DE)
(86) Internationale Anmeldenummer: EP0008770
(87) Internationale Veröffentlichungsnummer: WO01022453

(56) Entgegenhaltungen:
- EP-A- 0 333 139
- US-A- 4 501 149
- US-A- 5 798 457
- PATENT ABSTRACTS OF JAPAN vol. 007, no. 278 (P-242), 10. Dezember 1983 (1983-12-10) & JP 58 156851 A (TOKYO SHIBAURA DENKI KK), 17. September 1983 (1983-09-17)
- CHIN K K ET AL: "SPECTRAL EVALUATION OF ULTRASONIC FLAW ECHOES USING WIGNER DISTRIBUTION" PROCEEDINGS OF THE ULTRASONICS SYMPOSIUM,US,NEW YORK, IEEE, Bd. -, 4. Dezember 1990 (1990-12-04), Seiten 865-869, XP000289926

## Beschreibung

Die Erfindung betrifft ein Verfahren zur Bestimmung der Restlebensdauer der Schaltkontakte in einem elektrischen Schaltgerät und ein elektrisches Schaltgerät mit einer Auswerteeinrichtung zur Durchführung des Verfahrens gemäß dem Oberbegriff des unabhängigen Anspruches.

Aus der Druckschrift DE 40 28 721 C2 ist ein Verfahren zur Ermittlung der Restlebensdauer von Schaltgeräten und eine Anordnung zur Durchführung des Verfahrens bekannt. Gemäß diesem Verfahren werden nur Meßwerte verwendet, die in den Zuleitungen des Gerätes gemessen werden können. Konstruktive Änderungen des Schaltgerätes sollen hier bewußt vermieden werden.

Der Erfindung liegt die Aufgabe zugrunde, ein Verfahren sowie eine Einrichtung zur Durchführung des Verfahrens zu schaffen, wodurch die Charakterisierung von Schaltkontaktzuständen in Bezug auf die zu erwartende Lebensdauer beziehungsweise in Bezug auf den jeweils aktuellen Zustand eines elektrischen Schaltkontaktes verbessert wird.

Erfindungsgemäß wird diese Aufgabe durch die Gesamtheit der Merkmale des unabhängigen Anspruches gelöst, während den abhängigen Ansprüchen vorteilhafte Weiterbildungen der Erfindung zu entnehmen sind.

Hierfür werden durch den Schaltvorgang in den Kontaktstücken erzeugte Körperschallsignale der Schaltkontaktanordnung erfaßt, die erfaßten Körperschallsignale zur Erzeugung eines Sonogrammes in einzelnen Zeitfenstern einer Fouriertransformation unterworfen und gezielt einzelne Funktionswerte aus dem Sonogramm ermittelt und mittels einer Auswerteeinrichtung ausgewertet. Bevorzugte Funktionswerte sind der Spitzenwert mindestens einer Sonogrammamplitude, die Anstiegszeit einer Sonogrammamplitude vom auftreten des Signals bis zu dessen Maximalwert, die Abklingzeit der Sonogrammamplitude sowie der Ampltudenflächen-beziehungsweise Amplitudenraumschwerpunkt einer Sonogrammamplitude beziehungsweise eines Amplitudenraumes.

In einer bevorzugten Ausführungsform werden durch die gezielte Auswahl von drei verschiedenen Frequenzbändern (Frequenzbereiche), innerhalb derer Körperschallsignale der Kontaktstücke erfaßt und ausgewertet werden, Störeinflüsse weitestgehend unterdrückt (Frequenzbereiche mit hohen Störanteilen werden gezielt ausgeblendet) und aussagekräftige Signale für jeden Schaltkontakt individuell bestimmt. Gemäß der Erfindung wird dies erreicht, indem über die Signale der Körperschallwellen eines Schaltkontaktes in zumindest zwei von drei Frequenzbändern ein Integral gebildet wird, in dem dritten Frequenzband entweder ebenfalls ein Integral der auftretenden Schallsignale gebildet oder nur der Amplitudenwert des sonographisch ermittelten Schallsignalverlaufes (Sonogang) ermittelt wird und die so erhaltenen Werte aus den drei Frequenzbändern mittels einer Auswerteeinrichtung ausgewertet werden. Auf diese Weise werden die, während eines Schaltvorganges (Öffnungs- und/oder Schließvorgang der Schaltkontakte) innerhalb eines Schaltkontaktes auftretenden Körperschallsignale erfaßt und zur Beurteilung der Restlebensdauer ausgewertet.

Dadurch, daß ein Kontaktstück in verschiedenen Frequenzbändern besonders charakteristische Eigenschaften aufweist, die sich in Abhängigkeit von seinem Verschleißzustand entsprechend ändern, kann durch die Auswertung dieser Eigenschaften eine präzise Aussage über den Verschleißzustand und die damit verbundene Restlebensdauer des Schaltkontaktes getroffen werden.

Als besonders bevorzugte Frequenzbereiche für die drei Frequenzbänder sind die Bandbreiten 20 kHz - 35 kHz, 50 kHz - 125 kHz und 175 kHz - 225 kHz ermittelt worden. Dabei wird mit Vorteil innerhalb des ersten Frequenzbandes (20-35 kHz) der Amplitudengang des Sonoganges aus einem zugehörigen Sonogramm ermittelt und innerhalb des zweiten und dritten Frequenzbandes (50-125 kHz und 175-225 kHz) ein gebildeter Integralwert der Körperschallsignalamplituden gebildet. In einer anderen Verfahrensweise können auch in allen drei Frequenzbändern die Schallsignalamplituden integriert und diese Werte anschließend ausgewertet werden.

Die Ermittlung der Funktionswerte, des in einem zugehörigen Sonogramm ermittelten Sonoganges, wird vorzugsweise in einem Zeitbereich von drei bis sechs Millisekunden nach Schließen der Schaltkontakte (beziehungsweise Auftreten des ersten Körperschallsignals) ermittelt.

Zur Durchführung des erfindungsgemäßen Verfahrens findet ein Schaltgerät mit einer Auswerteeinrichtung Verwendung.
In einer ersten Ausführungsform ist die Auswerteeinrichtung nebst Körperschallsensoren in das Schaltgerät integriert. Dabei sind die Körperschallsensoren in Form von Piezoelementen derart mit dem Schaltkontakt gekoppelt, daß im Schaltkontakt bzw. im Kontaktstück selbst, entstehende Schallwellen erfaßbar sind.

In einer bevorzugten Ausführungsform sind die Körperschallsensoren über einen keramischen Kristallträger auf dem Kontaktstückträger oder einem mit diesem in Bezug auf die Übertragung der Körperschallwellen wirkverbundenen Element angeordnet. Hierdurch wird eine galvanische Trennung zwischen Schallsensor und Kontaktstückträger erreicht und gleichzeitig eine qualitativ hochwertige Weiterleitung der Körperschallwellen gewährleistet.
In einer zweiten Ausführungsform ist die Auswerteeinrichtung als separates Gerät oder als Bestandteil eines Mehrfunktionsgerätes (Mehrfachmeß- oder Diagnosegerät) ausgebildet. Dabei sind im Schaltgerät selbst, wie zuvor beschrieben, die Schallsensoren unmittelbar im Schaltgerät angeordnet und über eine Schnittstelle von außen kontaktierbar. Somit kann bei Bedarf über ein externes Auswertegerät die zu erwartende Restlebensdauer der Schaltkontakte eines erfindungsgemäßen Schaltgerätes ermittelt werden.

Weitere Einzelheiten und Vorteile der Erfindung ergeben sich aus dem folgenden, anhand von Figuren erläuterten Ausführungsbeispiel. Es zeigen
- Figur 1:: ein erfindungsgemäßes Schaltgerät in Form eines Schützes;
- Figur 2a, b:: die schematische Darstellung von Magnetantrieb und Kontaktsystem eines erfindungsgemäßen Schaltgerätes; und
- Figur 3:: schematische Darstellung eines Sonogrammverlaufes eines Schaltgerätes gemäß Fig 1 und 2, und
- Figur 4: die Abbildung der ermittelten Merkmale beziehungsweise Merkmalsräume in einem dreidimensionalen Frequenzraum.

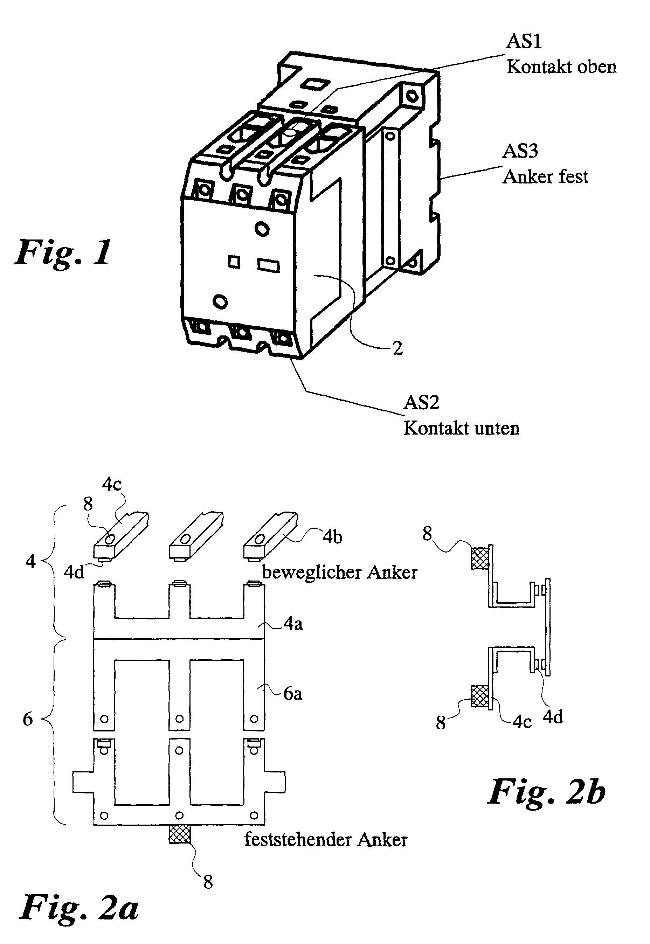

Fig. 1 zeigt ein erfindungsgemäßes Schaltgerät in Form eines Schützes. Ein derartiges Schütz umfaßt ein mehrteiliges Gehäuse 2 in dem ein Kontaktsystem (hier dreipolig), ein auf dieses Kontaktsystem wirkender Magnetantrieb sowie elektronische und/oder mechanische Auslöseelemente angeordnet sind. Mit AS1, AS2 und AS3 sind Positionen angedeutet, an denen in dem Schaltgerät Schallerfassungsmittel in Form akustischer Sensoren (AS) positioniert werden können. Bevorzugte Positionen zur Anbringung der Körperschallsensoren sind die Anordnung unmittelbar am Kontaktstück 4d selbst (z.B. zwischen Kontaktstück und Kontaktstückträger), am Kontaktstückträger 4c (insbesondere auf der diametral dem Kontaktstück gegenüberliegenden Seite) oder aber an den Anschlußklemmen des Schaltgerätes.

In den Figuren 2a und 2b ist ein Kontaktsystem 4 mit zugehörigem Magnetantrieb 6 schematisch dargestellt. Dabei besteht das Kontaktsystem im wesentlichen aus einem beweglichen Schaltkontakt 4a, hier in Form einer dreipolig ausgebildeten Kontaktbrücke, die über den beweglichen Anker 6a des Magnetantriebes 6 angetrieben ist und feststehenden Schaltkontakten 4b.

Das erfindungsgemäße Schaltgerät weist ferner eine Auswerteeinheit, insbesondere Mikroprozessor, zur Bestimmung der Restlebensdauer der Schaltkontakte auf.

Desweitern ist ein derartiges Schaltgerät mit Mitteln 8 zur Erfassung von Körperschallsignalen ausgebildet. Diese Körperschallerfassungsmittel 8 sind mit Vorteil durch Piezoelemente gebildet. Dabei handelt es sich um Piezoelemente die über einen weiten Hochfrequenzbereich, vorzugsweise 20 kHz bis 225 kHz oder gar 500 kHz, präzise Meßsignale liefern.
Vorzugsweise ist zumindest einem feststehenden Schaltkontakt 4b mindestens ein Körperschallerfassungsmittel 8 zugeordnet. Wie in Fig. 2b dargestellt, kann solch ein Körperschallerfassungsmittel am Kontaktträger 4c des zugehörigen Kontaktstückes 4d angeordnet sein. In einer besonders bevorzugten Ausführung der Erfindung ist das jeweils einem Schaltkontakt 4a, 4b zugeordnete Körperschallerfassungsmittel 8 derart montiert, daß eine galvanische Trennung gewährleistet wird. Vorzugsweise wird hierfür zwischen Kontaktstückträger 4d und Köperschallerfassungsmittel 8 ein keramischer Kristallträger montiert. Hierdurch wird ohne negativen Einfluß auf die Schallerfassung eine sichere galvanische Trennung realisiert.

In einer besonders vorteilhaften Ausführungsform sind einem Schaltkontakt 4a, 4b beziehungsweise dem jeweiligen Schaltstück 4d mindestens zwei Körperschallerfassungsmittel 8 zugeordnet. Hierdurch wird die partielle, ortsaufgelöste Untersuchung eines Schaltstückes 4d ermöglicht. Dies ist von Vorteil, da Kontaktstücke 4d in der Regel nur sehr ungleichmäßigem Verschleiß (Abbrand) unterliegen und somit eine qualitativ bessere Zustandsermittlung einzelner Teilbereiche des Kontaktstückes 4d ermöglicht wird. Für diese Ausführungsform ist von Vorteil, die einzelnen Körperschallerfassungsmittel 8 auf der dem Kontaktstück 4d gegenüberliegenden Seite auf dem Kontaktstückträger 4c selbst, unter dem zugehörigen Kontaktstück 4d, anzuordnen. Mit Vorteil werden einem Kontaktstück 4d vier Erfassungsmittel 8 zugeordnet. Dabei sind diese insbesondere derart angeordnet, daß jedes Erfassungsmittel 8 eines von vier Koordinatenfeldern eines karthesischen Koordinatensystems erfaßt und so der gesamte Kontaktstückbereich (bzw. der (unterschiedliche) Abbrand der gesamten Kontaktstückoberfläche) durch das Erfassungsmittel 8 und die Auswerteeinrichtung abgebildet wird.
In einer anderen Ausführungsform können die verschiedenen, einem einzigen Kontaktstück 4d zugeordneten Erfassungsmittel 8 (hier Piezos), ringförmig verschachtelt angeordnet sein. So können kreisringförmige Teilbereiche eines Schaltstückes 4d differenziert ausgewertet werden. Verschiedenste andere geometrische Ausführungsformen sind je nach Anwendungsfall ebenfalls denkbar.

Die Erfindung betrifft ferner ein Verfahren zur Bestimmung der Restlebensdauer der Schaltkontakte in einem vorstehend beschriebenen erfindungsgemäßen Schaltgerät. Derartige Schaltgeräte sind insbesondere Niederspannungsschaltgeräte wie Schütze, Leistungsschalter, Motorschutzschalter, Leitungsschutzschalter oder dergleichen.

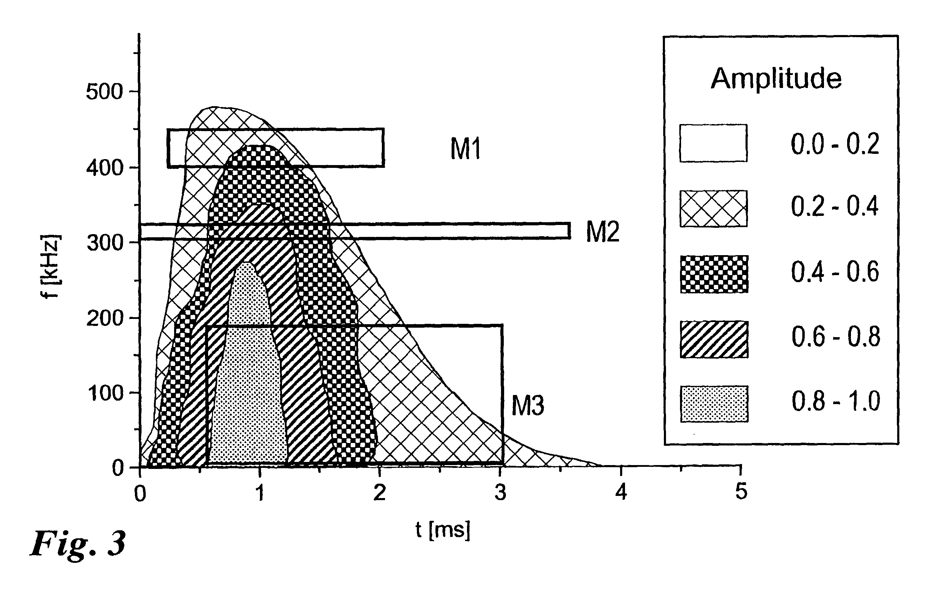

Gemäß dem Verfahren werden die durch den Schaltvorgang innerhalb der Kontaktstücke 4d erzeugten Körperschallsignale erfaßt, die erfaßten Körperschallsignale zur Erzeugung eines Sonogrammes in einzelnen Zeitfenstern einer Fouriertransformation unterworfen, gezielt einzelne Funktionswerte aus dem Sonogramm ermittelt und mittels der Auswerteeinrichtung ausgewertet, eine Restlebensdauer zugeordnet und diese zur Ausgabe und/oder Anzeige bereitgestellt. Eine schematische Sonogrammdarstellung ist in Figur 3 gezeigt. Aus dem Sonogramm werden über die gesamte Frequenzbreite und/oder in einem oder mehreren Frequenzbändern M beziehungsweise Einzelfrequenzen Zeitverläufe der jeweiligen Signalenergie ermittelt. Bevorzugte Funktionswerte für die Merkmalsbildung aus den Zeitverläufen sind der Spitzenwert mindestens einer Sonogrammamplitude, die Anstiegszeit einer Sonogrammamplitude vom Auftreten des Signals bis zu dessen Maximalwert, die Abklingzeit der Sonogrammamplitude von deren Maximalwert bis zu einem festgelegten Endwert sowie der Ampltudenflächen- beziehungsweise Amplitudenraumschwerpunkt einer Sonogrammabildung. Der Flächenbeziehungsweise Raumschwerpunkt wird durch den Punkt festgelgt, in dem im Durchschnitt die größte Signalintensität liegt. Hierbei können Signalverläufe in einem Zeitraum (dreidimensionale Abbildung) oder zu einem Zeitpunkt (zweidimensionale Abbildung) abgebildet werden. Desweiteren kann zur Merkmalsbildung das aktuelle Sonogramm (aus den erfaßten Istwerten) mit den Verläufen mindestens eines entsprechenden Referenzsonogrammes einer Kreuzkorrelation unterworfen werden.

Die Körperschallsignalerfassung erfolgt durch einen vorstehend beschriebenen Körperschallaufnehmer 8, insbesondere ein Piezoelement.

In einer ersten möglichen Ausführungsform wird mindestens ein Frequenzband (Frequenzbereich oder eine Einzelfrequenz) aus den erfaßten Schallsignalen selektiert. Hierdurch werden Störeinflüsse eleminiert und nur die, für das "überwachte" Kontaktstück 4d charakteristischen Informationen herausgefiltert. Die Signale des gesamten Frequenzbandes werden dann integriert und der gebildete Integralwert mittels einer Auswerteeinheit ausgewertet. Das geschieht zum Beispiel mit Hilfe eines Mikroprozessors, wobei in dem Mikroprozessor Referenzdaten für unverbrauchte und/oder verbrauchte Kontaktstücke 4d hinterlegt sind. So kann der ermittelte Integralwert mit dem entsprechenden Referenzwert verglichen werden und in Abhängigkeit der auftretenden Abweichung (Istwert/Sollwert) die zu erwartende Restlebensdauer ermittelt werden.Die Referenzwerte können in Form von bekannten oder ermittelten Erfahrungswerten vor der Inbetriebnahme in der Auswerteeinheit hinterlegt werden. In einer alternativen Ausführung können die Referenzwerte auch bei der erstmaligen Inbetriebnahme des neuen Schaltgerätes einfach eingelesen und abgespeichert werden.

Wird nur ein Frequenzband ausgewertet, wird hier vorzugsweise ein Frequenzband mit einer Bandbreite von 20 kHz bis 225 kHz oder gar bis 500 kHz ausgewertet.

In einer zweiten Ausführungsform des Verfahrens werden die erfaßten Körperschallsignale in mindestens zwei, vorzugweise drei verschiedenen Frequenzbändern ausgewertet. Dabei wird analog zu der ersten Ausführung in jedem einzelnen Frequenzband das zeitliche Integral der auftretenden Sonogrammamplituden gebildet und die so erhaltenen Werte mit entsprechenden Referenzwerten verglichen und ausgewertet.

In einer weiteren Ausführung des Verfahrens werden analog zu der zweiten Ausführung drei unterschiedliche Frequenzbänder selektiert, aber nur in zwei von ihnen durch entsprechende Bildung der Integralwerte verdichtet. Bei einem der Frequenzbänder wird lediglich der Amplitudenwert des sonagraphischen Verlaufes ermittelt. Entsprechend werden für eine Auswertung zwei Integralwerte und ein Sonagrammamplitudenwert weiterverarbeitet und ausgewertet.

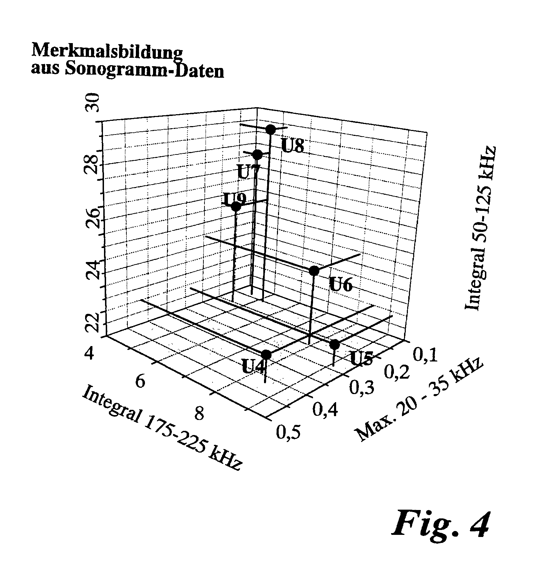

Die bevorzugten Frequenzbandbereiche sind 20 kHz - 35 kHz, 50 kHz - 125 kHz und 150 kHz - 225 kHz. Dabei wird bei der zuletzt beschriebenen Ausführung des Verfahrens der Amplitudenwert des sonagrphischen Signalverlaufes vorzugsweise in dem Frequenzbereich zwischen 20 kHz und 35 kHz ermittelt. Dieser Amplitudenwert wird mit Vorteil in einem Zeitintervall von 3-6 Millisekunden nach dem Schließen der Schaltkontakte 4a, 6a ermittelt. Figur 4 zeigt eine Möglichkeit der Merkmalsabbildung für das beschriebens Verfahren, wobei durch die zuvor ermittelten Werte (zwei Sonogramm-Integralwerte und ein Sonogramm-Amplitudenwert) entsprechende Merkmalsräume abgebildet werden. In der gezeigten Darstellung deuten die, durch die Merkmalspunkte U4, U5 und U6 gebildeten Merkmalsräume auf verschlissene Kontaktstücke 4d und die, durch die Merkmalspunkte U7, U8 und U9 gebildeten Merkmalsräume auf nahezu verschleißfreie Kontaktstücke hin.

Die vorliegende Erfindung ist nicht auf die vorstehend beschriebenen Ausführungsformen beschränkt, sondern umfaßt auch alle im Sinne der Erfindung gleichwirkenden Ausführungsformen. In einer weitern Ausführungsform kann ein Schallerfassungsmittel auch derart ausgebildet sein, daß mittels diesem eine definierte Schallerzeugung und Schalleinprägung gewährleistet ist. Hierdurch kann ein Schaltgerät im vorzugsweise stromlosen Zustand auf seine zu erwartende Restlebensdauer untersucht werden, indem über das Körperschallerfassungsmittel 8 das zu untersuchende Kontaktstückt 4d definiert erregt (Einprägung eines bekannten Schallspektrums) und nahezu gleichzeitig die Veränderung der eingeprägten Schallwellen durch eine bestimmte Beschaffenheit des zu untersuchenden Kontaktstückes 4d erfaßt wird und ausgewertet werden kann. Bevorzugt finden hierfür mindestens zwei, insbesondere vier separate Schallerfassungsmittel 8 bzw. ein Schallerfassungsmittel 8 mit unabhängigen Erfassungsbereichen Anwendung. Hierdurch können einzelne örtliche Bereiche eines Kontaktstückes 4d separat erfaßt und ausgewertet werden. In einer Weiterbildung können den unterschiedlichen Erfassungsmitteln 8 unterschiedliche Gewichtungen zugeordnet werden. Das kann durch eine unterschiedliche Auswertung im Mikroprozessor oder aber durch Erfassungsmittel 8 mit unterschiedlicher Empfindlichkeit realisiert werden.

## Patentansprüche

1. Verfahren zur Bestimmung der Restlebensdauer der Schaltkontakte in einem elektrischen Schaltgerät, insbesondere Niederspannungsschaltgerät, **dadurch gekennzeichnet, daß**
- durch den Schaltvorgang erzeugte Körperschallsignale der Schaltkontaktanordnung erfaßt werden,
- die erfaßten Körperschallsignale zur Erzeugung eines Sonogrammes in einzelnen Zeitfenstern einer Fouriertransformation unterworfen werden, und
- gezielt einzelne Funktionswerte aus dem Sonogramm ermittelt und mittels einer Auswerteeinrichtung ausgewertet werden.

2. Verfahren nach Anspruch 1, **dadurch gekennzeichnet, daß** die Funktionswerte innerhalb eines einzigen Frequenzbandes oder bei einer einzigen Einzelfrequenz ermittelt werden.

3. Verfahren nach Anspruch 2, **dadurch gekennzeichnet, daß** das Frequenzband eine Bandbreite von 20 kHz bis 225 kHz aufweist.

4. Verfahren nach Anspruch 1, **dadurch gekennzeichnet, daß** die Funktionswerte innerhalb von mindestens zwei, vorzugsweise drei Frequenzbändern unterschiedlicher Frequenzbereiche und/oder bei unterschiedlichen Einzelfrequenzen ermittelt werden.

5. Verfahren nach Anspruch 4, **dadurch gekennzeichnet, daß** ein erstes Frequenzband eine Bandbreite von 20 kHz bis 35 kHz, ein zweites Frequenzband eine Bandbreite von 50 kHz bis 125 kHz und ein drittes Frequenzband eine Bandbreite von 175 kHz bis 225 kHz aufweist.

6. Verfahren nach einem oder mehreren der vorherigen Ansprüche, **dadurch gekennzeichnet, daß** zumindest der Spitzenwert mindestens einer Sonogrammamplitude als Funktionswert ermittelt und ausgewertet wird.

7. Verfahren nach einem oder mehreren der vorherigen Ansprüche, **dadurch gekennzeichnet, daß** zumindest die Anstiegszeit einer Sonogrammamplitude als Funktionswert ermittelt und ausgewertet wird.

8. Verfahren nach einem oder mehreren der vorherigen Ansprüche, **dadurch gekennzeichnet, daß** zumindest die Abklingzeit einer Sonogrammamplitude als Funktionswert ermittelt und ausgewertet wird.

9. Verfahren nach einem oder mehreren der vorherigen Ansprüche, **dadurch gekennzeichnet, daß** zumindest der Flächen- beziehungsweise Raumschwerpunkt einer Sonogrammabbildung ermittelt und ausgewertet wird.

10. Verfahren nach einem oder mehreren der vorherigen Ansprüche, **dadurch gekennzeichnet, daß** über die Sonogrammamplituden in dem mindestens einen Frequenzband zumindest bereichsweise ein Integral über der Zeit gebildet und jeder gebildete Integralwert ausgewertet wird.

11. Verfahren nach einem oder mehreren der vorherigen Ansprüche, **dadurch gekennzeichnet, daß** eine Kreuzkorrelation eines Ist-Sonogrammes mit mindestens einem Referenz-Sonogramm erfolgt.

12. Verfahren nach einem oder mehreren der vorstehenden Ansprüche, **dadurch gekennzeichnet, daß** die während des Öffnungs- und/oder Schließvorgangs der Schaltkontakte erzeugten Körperschallsignale erfaßt und ausgewertet werden.

13. Schaltgerät zur Durchführung des Verfahrens nach einem oder mehreren der vorherigen Ansprüche, mit einem Kontaktsystem und einer Auswerteeinrichtung zur Bestimmung der Restlebensdauer, **gekennzeichnet durch** Mittel (8) zur Erfassung von Körperschallsignalen.

14. Schaltgerät nach Anspruch 13, **dadurch gekennzeichnet, daß** zumindest einem feststehenden Kontakt (4b) und/oder einem beweglichen Kontakt (4b) mindestens ein Schallerfassungsmittel (8) zugeordnet ist.

15. Schaltgerät nach Anspruch 13 oder 14, **dadurch gekennzeichnet, daß** die Schalierfassungsmittel (8) durch Piezoelemente gebildet werden.

16. Schaltgerät nach einem oder mehreren der Ansprüche 13-15, **dadurch gekennzeichnet, daß** jedes Schallerfassungsmittel (8) derart ausgebildet ist, daß es eine definierte Schallerzeugung beziehungsweise Schalleinprägung gewährleistet.

17. Schaltgerät nach einem oder mehreren der Ansprüche 13-16, **dadurch gekennzeichnet, daß** jedem Schaltkontakt mindestens zwei Schallerfassungsmittel (8) zugeordnet sind, derart, das die Körperschallerfassung einzelner Teilbereiche eines Schaltkontaktes gewähleistet ist.

18. Schaltgerät nach Anspruch 17, **dadurch gekennzeichnet, daß** zumindest zwei der Schallerfassungsmittel (8) eine unterschiedliche Gewichtung für die Auswertung zukommt.

19. Schaltgerät nach Anspruch 17, **dadurch gekennzeichnet, daß** zumindest zwei der Schallerfassungsmittel (8) eine unterschiedliche Empfindlichkeit zur Schallerfassung aufweisen.

20. Schaltgerät nach einem oder mehreren der Ansprüche 13-19, **dadurch gekennzeichnet, daß** jedem Schaltkontakt (4a, 4b) vier einzelne Schallerfassungsmittel (8) zugeordnet sind und diese in Viertelsegmenten die geometrische Form des Kontaktstückes nachbilden.

21. Schaltgerät nach einem oder mehreren der Ansprüche 13-20, **dadurch gekennzeichnet, daß** die einzelnen einem Schaltkontakt zugeordneten Schallerfassungsmittel (8) auf dem Kontaktstückträger auf dessen gegenüberliegenden Seite unmittelbar gegenüber dem Schaltkontakt angeordnet sind.

22. Schaltgerät nach einem oder mehreren der Ansprüche 13-21, **dadurch gekennzeichnet, daß** jedes Schallerfassungsmittel (8) eine Bandbreite von mindestens 20 kHz - 225 kHz, vorzugsweise 20 kHz - 500 kHz, aufweist.

23. Schaltgerät nach einem oder mehreren der Ansprüche 13-22, **dadurch gekennzeichnet, daß** jedes auf einem Kontakstückträger zu montierendes Schallerfassungsmittel (8) von dem Kontakstückträger galvanisch getrennt angeordnet ist.

24. Schaltgerät nach Anspruch 23, **dadurch gekennzeichnet, daß** jedes Schallerfassungsmittel (8) auf einem Keramikträger montiert ist.

## Claims

1. Method for determining the remaining service life of the switching contacts in an electrical switching device, in particular, a low-voltage switching device,
**characterized in that**
- structure-borne sound signals of the switching contact arrangement which are produced by the switching operation are captured,
- the captured structure-borne sound signals are subjected to a Fourier transform in discrete time slots to produce a sonogram, and
- individual function values are selectively determined from the sonogram and evaluated using an evaluation unit.

2. Method according to Claim 1, **characterized in that** the function values are determined within a single frequency band or at a single discrete frequency.

3. Method according to Claim 2, **characterized in that** the frequency band has a bandwidth of 20 kHz to 225 kHz.

4. Method according to Claim 1, **characterized in that** the function values are determined within at least two, preferably three frequency bands of different frequency ranges and/or at different discrete frequencies.

5. Method according to Claim 4, **characterized in that** a first frequency band has a bandwidth of 20 kHz to 35 kHz, a second frequency band has a bandwidth of 50 kHz to 125 kHz, and a third frequency band has a bandwidth of 175 kHz to 225 kHz.

6. Method according to one or more of the preceding claims, **characterized in that** at least the peak value of at least one sonogram amplitude is determined and evaluated as a function value.

7. Method according to one or more of the preceding claims, **characterized in that** at least the rise time of a sonogram amplitude is determined and evaluated as a function value.

8. Method according to one or more of the preceding claims, **characterized in that** at least the decay time of a sonogram amplitude is determined and evaluated as a function value.

9. Method according to one or more of the preceding claims, **characterized in that** at least the area centroid or spatial centroid of a sonogram image is determined and evaluated.

10. Method according to one or more of the preceding claims, **characterized in that**, over the sonogram amplitudes of the at least one frequency band, an integral is formed over time, at least range-wise, and each resulting integrated value is evaluated.

11. Method according to one or more of the preceding claims, **characterized in that** an actual sonogram is cross-correlated with at least one reference sonogram.

12. Method according to one or more of the preceding claims, **characterized in that** the structure-borne sound signals produced during the opening and/or closing operation of the switching contacts are captured and evaluated.

13. Switching device for carrying out the method according to one or more of the preceding claims, comprising a contact system and an evaluation unit for determining the remaining service life, **characterized by** means (8) for capturing structure-borne sound signals.

14. Switching device according to Claim 13, **characterized in that** at least one sound capturing means (8) is assigned to at least one stationary contact (4b) and/or one movable contact (4a).

15. Switching device according to Claim 13 or Claim 14, **characterized in that** the sound capturing means (8) are constituted by piezoelectric elements.

16. Switching device according to one or more of the Claims 13 to 15, **characterized in that** each sound capturing means (8) is designed in such a manner as to ensure a defined impression of sound.

17. Switching device according to one or more of the Claims 13 to 16, **characterized in that** at least two sound capturing means (8) are assigned to each switching contact in such a manner as to ensure the capture of structure-borne sound of individual partial areas of a switching contact.

18. Switching device according to Claim 17, **characterized in that** at least two of the sound capturing means (8) are given different weighting in view of the evaluation.

19. Switching device according to Claim 17, **characterized in that** a different sensitivity for the capture of sound is assigned to at least two of the sound capturing means (8).

20. Switching device according to one or more of the Claims 13 to 19, **characterized in that** four individual sound capturing means (8) are assigned to each switching contact (4a, 4b) and **in that** said sound capturing means, in quarter segments, imitate the geometric shape of the contact.

21. Switching device according to one or more of the Claims 13 to 20, **characterized in that** the individual sound capturing means (8) assigned to a switching contact are arranged on the contact carrier on its opposite side immediately opposite the switching contact.

22. Switching device according to one or more of the Claims 13 to 21, **characterized in that** each sound capturing means (8) has a bandwidth of at least 20 kHz to 225 kHz, preferably 20 kHz to 500kHz.

23. Switching device according to one or more of the Claims 13 to 22, **characterized in that** each sound capturing means (8) to be mounted on a contact carrier is arranged in such a manner that it is galvanically isolated from the contact carrier.

24. Switching device according to Claim 23, **characterized in that** each sound capturing means (8) is mounted on a ceramic carrier.

## Revendications

1. Procédé permettant de déterminer la durée de service restante des contacts de commutation dans un commutateur électrique, en particulier un appareil de commutation électrique à basse tension,
**caractérisé en ce que**
- des signaux sonores de structure de la configuration de contacts sont saisis, qui sont produits par l'opération de commutation,
- les signaux sonores de structure saisis sont soumis a une transformée Fourier dans des fenêtres de temps discrètes en vue de la génération d'un sonogramme et,
- des valeurs de fonction individuelles sélectives sont déterminées à partir du sonogramme et évaluées à l'aide d'un dispositif d'évaluation.

2. Procédé selon la revendication 1, **caractérisé en ce que** les valeurs de la fonction sont déterminées dans une seule bande de fréquences ou pour une seule fréquence discrète.

3. Procédé selon la revendication 2, **caractérisé en ce que** la bande de fréquences présente une largeur de bande de 20 kHz à 225 kHz.

4. Procédé selon la revendication 1, **caractérisé en ce que** les valeurs de la fonction sont déterminées dans au moins deux, préférablement trois bandes de fréquences ayant des plages de fréquences différentes, et/ou à des fréquences discrètes différentes.

5. Procédé selon la revendication 4, **caractérisé en ce qu'**une première bande de fréquences présente une largeur de bande de 20 kHz à 35 kHz, qu'une deuxième bande de fréquences a une largeur de bande de 50 kHz à 125 kHz, et qu'une troisième bande de fréquences présente une largeur de bande de 175 kHz à 225 kHz.

6. Procédé selon l'une ou plusieurs des revendications précédentes, **caractérisé en ce qu'** au moins la valeur de crête d'au moins une amplitude du sonogramme est déterminée et évaluée comme valeur de la fonction.

7. Procédé selon l'une ou plusieurs des revendications précédentes, **caractérisé en ce qu'** au moins le temps de montée d'une amplitude du sonogramme est déterminé et évalué comme valeur de la fonction.

8. Procédé selon l'une ou plusieurs des revendications précédentes, **caractérisé en ce qu'** au moins le temps d'amortissement d'une amplitude du sonogramme est déterminé et évalué comme valeur de la fonction.

9. Procédé selon l'une ou plusieurs des revendications précédentes, **caractérisé en ce qu'** au moins le centre de gravité en surface ou en espace d'un image du sonogramme est déterminé et évalué.

10. Procédé selon l'une ou plusieurs des revendications précédentes, **caractérisé en ce que**, dans au moins une bande de fréquences, un intégral est formé par rapport au temps sur les amplitudes du sonogramme, et ceci au moins par plages, et que chacune des valeurs intégrées résultantes est évaluée.

11. Procédé selon l'une ou plusieurs des revendications précédentes, **caractérisé en ce qu'** une corrélation mutuelle est effectuée d'un sonogramme réel avec au moins un sonogramme de référence.

12. Procédé selon l'une ou plusieurs des revendications précédentes, **caractérisé en ce que** les signaux sonores de structure produits au cours de l'ouverture et/ou de la fermeture des contacts de commutation sont saisis et évalués.

13. Appareil de commutation pour la mise en oeuvre du procédé selon l'une ou plusieurs des revendications précédentes, comprenant un ensemble de contacts et un dispositif d'analyse permettant de déterminer la durée de service restante, **caractérisé par** des moyens détecteurs (8) pour la saisie de signaux sonores de structure.

14. Appareil de commutation selon la revendication 13, **caractérisé en ce qu'**au moins un moyen détecteur de son (8) est associé à au moins un contact fixe (4b) et/ou un contact mobile (4a).

15. Appareil de commutation selon la revendication 13 ou la revendication 14, **caractérisé en ce que** les moyens détecteurs de son (8) sont constitués d'éléments piézoélectriques.

16. Appareil de commutation selon l'une ou plusieurs des revendications 13 à 15, **caractérisé en ce que** chacun des moyens détecteurs de son (8) est conformé de telle manière à assurer une application définie de son.

17. Appareil de commutation selon l'une ou plusieurs des revendications 13 à 16, **caractérisé en ce qu'**au moins deux moyens détecteurs de son (8) sont associés à chacun des contacts de commutation de telle manière à assurer la saisie des signaux sonores de structure de zones partielles individuelles d'un contact de commutation.

18. Appareil de commutation selon la revendication 17, **caractérisé en ce qu'**au moins à deux des moyens détecteurs de son (8) est assignée une pondération différente en vue de l'évaluation.

19. Appareil de commutation selon la revendication 17, **caractérisé en ce qu'**au moins deux des moyens détecteurs de son (8) présentent une sensibilité différente pour la saisie de son.

20. Appareil de commutation selon l'une ou plusieurs des revendications 13 à 19, **caractérisé en ce que** quatre moyens détecteurs de son (8) individuels sont associés à chacun des contacts de commutation (4a, 4b), lesdits moyens détecteurs de son étant conformés pour imiter, dans des quarts de segment, la forme géométrique du contact.

21. Appareil de commutation selon l'une quelconque ou plusieurs des revendications 13 à 20, **caractérisé en ce que** les moyens détecteurs de son (8) individuels associés à un contact de commutation sont disposés sur le porte-contacts sur la face opposée de celui-ci et immédiatement en face du contact de commutation.

22. Appareil de commutation selon l'une ou plusieurs des revendications 13 à 21, **caractérisé en ce que** chacun des moyens détecteurs de son (8) présente une largeur de bande d'au moins 20 kHz à 225 kHz, préférablement de 20 kHz à 500 kHz.

23. Appareil de commutation selon l'une ou plusieurs des revendications 13 à 22, **caractérisé en ce que** chacun des moyens détecteurs de son (8) à monter sur un porte-contacts est disposé de telle manière qu'il est séparé galvaniquement du porte-contacts.

24. Appareil de commutation selon la revendication 23, **caractérisé en ce que** chacun des moyens détecteurs de son (8) est monté sur un support en céramique.
